# EUROPEAN PATENT SPECIFICATION

(11) **EP 3 281 860 B1**
(45) Date of publication and mention of the grant of the patent: **17.10.2018**
(21) Application number: 16183322.3
(22) Date of filing: 09.08.2016
(51) Int. Cl.: B64C 1/00, E04B 1/19

(54) **AIRCRAFT CABIN WITH SECONDARY AIRCRAFT CABIN STRUCTURE MOUNTED WITH ROTARY JOINTS AND METHOD FOR MOUNTING A SECONDARY AIRCRAFT CABIN STRUCTURE IN AN AIRCRAFT CABIN**
FLUGZEUGKABINE MIT SEKUNDÄRER FLUGZEUGKABINENSTRUKTUR, DIE MIT DREHGELENKEN ANGEBRACHT IST, UND VERFAHREN ZUR MONTAGE EINER SEKUNDÄREN FLUGZEUGKABINENSTRUKTUR IN EINER FLUGZEUGKABINE
CABINE D'AVION AVEC STRUCTURE DE CABINE D'AÉRONEF SECONDAIRE MONTÉE AVEC DES JOINTS ROTATIFS ET PROCÉDÉ DE MONTAGE D'UNE STRUCTURE DE CABINE D'AÉRONEF SECONDAIRE DANS UNE CABINE D'AVION

(43) Date of publication of application: 14.02.2018
(73) Proprietor: Airbus Operations GmbH, 21129 Hamburg (DE)
(72) Inventor: Benthien, Hermann, 21129 Hamburg (DE); Schaefer, Bastian, 21129 Hamburg (DE)
(74) Representative: Isarpatent

(56) References cited:
- EP-A1- 2 921 600
- US-A1- 2006 237 585
- US-A1- 2007 125 909
- US-A1- 2008 078 872

## Description

### FIELD OF THE INVENTION

The present invention relates to an aircraft cabin with secondary aircraft cabin structures mounted to the fuselage with rotary joints, an aircraft having such an aircraft cabin and a method for mounting a secondary aircraft cabin structure in an aircraft cabin using rotary joints.

### BACKGROUND OF THE INVENTION

Beams, joists and frames for construction work, for example in aeronautics, civil engineering or architecture, are designed to withstand bending forces acting perpendicular to the direction of extension of the respective beams. Conventional beams may be implemented as an integral part with flanges at the edges and a web spanning between the flanges. Alternatively, instead of a web, cutter milled struts may be implemented between parallel running longitudinal support bars, thus leading to decreased weight of the beam due to less material being used to form the beam.

Local load introduction into such beams or frames may, however, lead to torsional moments that are introduced into the attachment joints of the struts with the longitudinal support bars. Such torsional moments may in turn lead to additional moments within the longitudinal support bars that will have to be compensated for by local strengthening means, thereby nullifying some or all of the weight advantages gained.

Document US 6,622,447 B1 discloses a modular structural system for building models and structures, using a plurality of connector hub members with spherical symmetry, and a plurality of strut members with longitudinal symmetry, wherein the strut members are removably engageable with the connector hub members placing the strut members in corresponding radial and tangential positions relative to the connector hub members. Document CA 2 237 020 A1 and DE 38 00 547 A1 each disclose a set of structural elements for producing supporting structures, using supporting bars and cylindrical connecting elements for insertion heads provided on the end sides of the supporting bars. Document US 8,651,914 B2 discloses a set of construction components that may be assembled by connecting male and female snap-lock connectors. A female snap-lock connector includes a deflectable channel opening into a wider cavity; a male snap-lock connector includes a cylindrical head, a neck, and seat.

Document US 2006/237585 discloses an aircraft cabin where a panel member is attached to the bulkhead members of the fuselage by a plurality of struts.

Document EP 2921600 discloses a rotary joint and a plurality of interconnection struts.

Cockpit walls, cabin partitions and similar secondary aircraft cabin structures are routinely used to separate cabin space in aircraft. In order to avoid having to reinforce the primary structure of the aircraft, i.e. the fuselage with frames and stringers, deformation and tolerances of the primary structure have to be sufficiently decoupled from the secondary aircraft cabin structures. Typically, attachment mechanisms using floating rod joints, rotationally decoupled lugs or fork/bolt connections have been used hitherto which mechanisms compensate for any deformations and tolerances of the primary structure. However, such mechanisms usually add a lot of undesired system weight and are expensive to implement.

### SUMMARY OF THE INVENTION

One object of the invention is to provide solutions for improving the mounting mechanism of secondary aircraft cabin structures to a primary aircraft structure that avoids the transfer of forces between the secondary and primary structures in an efficient and weight saving manner.
This object is achieved by an aircraft cabin having the features of claim 1, an aircraft having the features of claim 7, and a method for mounting a secondary aircraft cabin structure in an aircraft cabin having the features of claim 8.

A first aspect of the disclosure pertains to an aircraft cabin comprising a primary structure, wherein the primary structure comprises at least one fuselage element, a secondary aircraft cabin structure, wherein the secondary aircraft cabin structure comprises a cabin partition element such as a cockpit wall, and wherein the secondary aircraft cabin structure is fully decoupled from the primary structure element to which it is attached; and a plurality of interconnecting struts coupling the primary structure to the secondary aircraft cabin structure, each of the plurality of interconnecting struts comprising engaging members at the respective end portions for insertion into strut holding fixtures of corresponding rotary joints attached at each opposing end. Each of the rotary joints comprises an outer shell segment having the outer shape of a segment of a solid of revolution, the outer shell segment having an opening arranged in the outer surface, an inner shell segment having the outer shape of the segment of the solid of revolution of the outer shell segment, the inner shell segment being aligned concentrically with the outer shell segment and spaced apart from the outer shell segment by a compensation gap, and a strut holding fixture having a hollow interior and a flange portion and being arranged in the opening so that the flange portion extends within the compensation gap between the inner shell segment and the outer shell segment.
According to a second aspect of the disclosure, an aircraft comprises an aircraft cabin according to the first aspect of the disclosure.
According to a third aspect of the disclosure, a method for mounting a secondary aircraft cabin structure in an aircraft cabin comprises engaging a plurality of interconnection struts comprising engaging members at the respective end portions with respective strut holding fixtures of a plurality of rotary joints. Each of the plurality of rotary joints comprises an outer shell segment having the outer shape of a segment of a solid of revolution, the outer shell segment having an opening arranged in the outer surface, an inner shell segment having the outer shape of the segment of the solid of revolution of the outer shell segment, the inner shell segment being aligned concentrically with the outer shell segment and spaced apart from the outer shell segment by a compensation gap, and a strut holding fixture having a hollow interior and a flange portion and being arranged in the opening so that the flange portion extends within the compensation gap between the inner shell segment and the outer shell segment. The method further comprises connecting the rotary joints at first end portions of the interconnection struts with a primary structure of an aircraft cabin, wherein the primary structure comprises at least one fuselage element,, and connecting the rotary joints at second end portions opposite to the first end portions of the interconnection struts with a secondary aircraft cabin structure, wherein the secondary aircraft cabin structure comprises a cabin partition element such as a cockpit wall; and wherein the secondary aircraft cabin structure is fully decoupled from the primary structure element to which it is attached.

The idea on which the present invention is based is to improve the connection nodes of a secondary aircraft cabin structure with a primary structure by employing rotary joints that have two concentrically nested shells of quadric shape. The nested shells are spaced apart by a gap in which sliding members may be formed. The sliding members may in each case be flange portions of holding fixtures that stick out of the outer one of the nested shells through openings or holes in the outer shell. The holding fixtures are designed to engage one end of a connecting strut each, so that a lateral moment on the strut with respect to the outer surface of the nested shells will lead to a shifting movement of the sliding member along the outer surface of the inner one of the shells. Two rotary joints are used on each end of the connecting strut with a first one of the rotary joints decoupling motion from the primary structure into the strut and a second one of the rotary joints decoupling motion from the secondary aircraft cabin structure into the strut.
Thus, any bending moment acting perpendicular to the orientation of the struts will vanish with respect to the annulus made up by the nested shells due to the movement of the sliding members on the surface of the inner shell. This means in turn that the rotary joints will be essentially free of any bending moments that would otherwise be brought into the rotary joints. The axes of the struts will always be oriented towards the centre of symmetry of the rotary joints, thereby balancing out the rotary joints optimally under any loading situation on the struts. In turn, this provides an optimum lateral and rotation decoupling of the secondary aircraft cabin structure with respect to the primary structure. One particular advantage associated with the use of two rotary joints as connection nodes is the implementation of a solution without floating coupling members. This allows for precise positioning of the secondary aircraft cabin structure, specifically of cockpit walls.

Particularly advantageous may additionally be the reduction of costs, weight, lead time, part count and manufacturing complexity coming along with employing any kind of layer manufacturing technology when designing the connection components for the secondary structures, specifically the rotary joints.

According to an embodiment of the aircraft cabin, the outer shell segment, the inner shell segment and the strut holding fixture may be formed as an integral assembly by an additive layer manufacturing, ALM, technique.

According to a further embodiment of the aircraft cabin, the diameter of the strut holding fixtures may lower than the diameter of the openings by a predefined clearance value. In some embodiments, the diameter of the flange portion may be greater than the diameter of the opening.

According to a further embodiment of the aircraft cabin, the plurality of interconnection struts may comprise a first female-threaded strut section having a hollow cylindrical profile with a female-threaded locking nut and a second strut section having a male-threaded end portion, the male-threaded end portion being engageable into the female thread of the locking nut and the female thread of the hollow cylindrical profile of the first female-threaded strut section.

### BRIEF DESCRIPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 schematically illustrates an aircraft cabin with secondary aircraft cabin structures mounted to the fuselage with rotary joints according to an embodiment.
Fig. 2 schematically illustrates a cross sectional view through a rotary joint according to another embodiment.
Fig. 3 schematically illustrates a cross sectional view through two rotary joints coupled to a connecting strut according to a further embodiment.
Fig. 4 schematically illustrates a secondary aircraft cabin structure element with connection points according to a further embodiment.
Fig. 5 schematically illustrates a front view of a connecting strut according to a further embodiment.
Fig. 6 schematically illustrates a cross sectional view of the connecting strut of Fig. 5.
Fig. 7 schematically illustrates a perspective view of a part of the connecting strut of Fig. 5.
Fig. 8 schematically illustrates a perspective view of another part of the connecting strut of Fig. 5.
Fig. 9 schematically illustrates a perspective view of a locking/securing nut of the connecting strut of Fig. 5.
Fig. 10 schematically illustrates a cross sectional view of a detail of the connecting strut of Fig. 5.

### DETAILED DESCRIPTION OF EMBODIMENTS OF THE INVENTION

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

Some of the components, elements and assemblies as disclosed hereinforth may be fabricated using layer manufacturing (LM) methods which free form fabrication (FFF), direct manufacturing (DM) and additive manufacturing (AM) belong to. Those methods are used to form a three-dimensional solid object by sequentially building up layers of material. Any of such procedures will be referred to in the following description as additive layer manufacturing (ALM) or layer manufacturing (LM) without loss of generality. ALM or LM techniques usually include selectively depositing material layer by layer, selectively fusing or solidifying the material and removing excess material, if needed.

ALM or LM techniques may be used in procedures for building up three-dimensional solid objects based on digital model data. ALM/LM employs an additive process where layers of material are sequentially built up in different shapes. ALM/LM is currently used for prototyping and distributed manufacturing with multiple applications in engineering, construction, industrial design, automotive industries and aerospace industries.

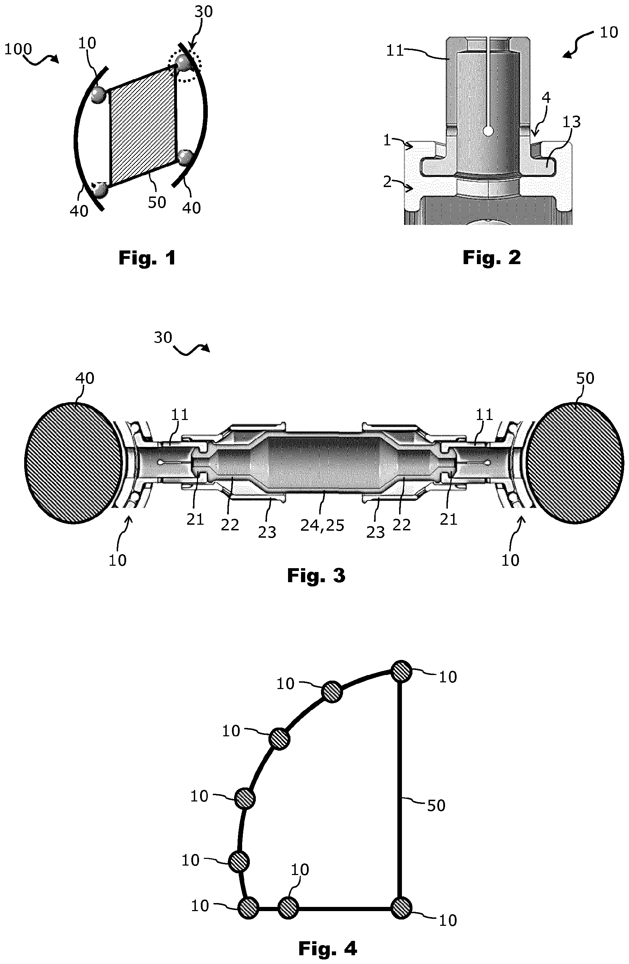

Fig. 1 shows a schematic illustration of a part of an aircraft cabin 100 having primary structure elements, such as fuselage elements 40, and secondary aircraft cabin structures, such as a cabin partition element 50. The cabin partition element 50 may for example be a cockpit wall, a galley separation element or a lavatory wall element. The cabin partition element 50 is mounted to the fuselage elements 40 by means of rotary joints 10 in joint regions 30 of which four are exemplarily illustrated in Fig. 1. Of course, it should be understood that the location and number of joint regions 30 used to connect secondary aircraft cabin structures to primary structure elements may vary according to the circumstances and the mechanical properties of the secondary aircraft cabin structures and/or the primary structure elements.

Fig. 4 exemplarily illustrates a cabin partition element 50 as a secondary aircraft cabin structure that may be connected to a primary structure element, such as the fuselage elements 40 of Fig. 1. In Fig. 4, several locations for joint regions 30 are exemplarily depicted at the circumference of the secondary aircraft cabin structure.

Generally, the connection of the secondary aircraft cabin structures 50 to the primary structure elements 40 is implemented using connecting struts having separate rotary joint connectors at opposing ends thereof. Such connecting struts with separate rotary joint connectors as used in the joint regions 30 and the constituting components and elements thereof are exemplarily shown in various degrees of detail in the Figs. 3, 5, 6, 7, 8, 9 and 10. Those Figs. exemplarily show schematic illustrations of parts and components as may be used in the aircraft cabin 100 of Fig. 1, particularly for mounting secondary aircraft cabin structures to primary structure elements in an aircraft cabin.

The secondary aircraft cabin structures 50 are interconnected to the primary structure elements 40 at joint regions 30. Each of the joint regions 30 may have two rotary joints 10 connected to opposing end portions of interconnection struts 20 reaching into the particular joint region 30. The framework of joint regions 30 may have a generally two-dimensional layout, i.e. the struts 20 and rotary joints 10 are substantially lying in one plane of extension which may be flat or arcuate. In the exemplary case of Fig. 1 the framework of joint regions 30 is coplanar with the plane of the secondary aircraft cabin structure 50 which may be a flat, arcuate or slightly bent wall element of constant or at least only insignificantly varying thickness.

Fig. 2 shows a cross-sectional view of a rotary joint 10 as may be used at one end of an interconnecting strut in a joint region 30 of the aircraft cabin. The rotary joint 10 includes an outer shell segment 1 having the outer shape of a cylinder, particularly a spherical cylinder, or a spheroid or sphere segment. The outer shell segment 1 has an opening 4 arranged in the outer surface, for example equidistantly over the outer surface of the outer shell segment 1. The opening 4 may for example be cut, milled or bored into the outer surface. If the rotary joint 10 is manufactured using a LM technique, the opening 4 may as well be included into the joint by virtue of design. The shape of the opening 4 may particularly be circular in the plane of the outer surface of the outer shell segment 1; however other shapes like elliptical shapes or rectangular shapes may be possible as well.

It may also be possible to provide openings of different opening diameter instead of similarly sized openings 4 for different rotary joints 10.

The rotary joint 10 further includes an inner shell segment 2 having the outer shape of a cylinder, particularly a spherical cylinder, or a spheroid or sphere segment, the inner shell segment 2 being aligned concentrically with the outer shell segment 1. While the inner shell segment 2 and the outer shell segment 1 are connected by connection portions in the boundary regions of the rotary joint 10 (left and right hand side portions of the depicted joint in Fig. 2), the inner shell segment 2 is spaced apart from the outer shell segment 1 by a compensation gap in a centre region (the region of the opening 4). In other words, the inner shell segment 2 and the outer shell segment 1 may be connected to each other in regions outside the opening 4, so that the compensation gap is arranged substantially below the opening 4. The inner shell segment 2 may be formed integrally with the outer shell segment 1, for example by using a LM manufacturing technology. The compensation gap is laterally bounded by the connection portions between the inner and outer shell segments, so that the only access to the compensation gap is through the opening 4 and, optionally, through openings in the inner surface of the inner shell segment 2.

The rotary joint 10 further comprises a strut holding fixture 11, the strut holding fixture 11 having a hollow interior and a flange portion 13. The strut holding fixture 11 has the general shape of a top hat open to both sides, with the flange portion 13 forming the brim of the hat. The strut holding fixture 11 may be designed to fit into the shape of the opening 4; that is, the strut holding fixture 11 may have a cylindrical, elliptical or rectangular hollow portion, depending on the choice of shape for the opening 4. The strut holding fixture 11 is arranged in the opening 4, so that the flange portion 13 extends within the compensation gap between the inner shell segment 2 and the outer shell segment 1. In Figs. 2 and 3, the diameter of the hollow portion of the strut holding fixture 11 is lower than the diameter of the opening 4 by a predefined clearance value, so that the outer walls of the strut holding fixture 11 are spaced apart from the inner side walls of the opening 4 by the predefined clearance value. At the same time, the diameter of the flange portion 13 may be greater than the diameter of the opening 4, so that the flange portion 13 extends within the compensation gap below the projection of the opening 4 onto the inner shell segment 2. The outer shell segment 1, the inner shell segment 2 and the strut holding fixture 11 may for example be formed as an integral assembly. Such integral assemblies may be conveniently manufactured using an additive layer manufacturing, ALM, technique.

The strut holding fixtures 11 may be designed as part of a snap-fit or snap-lock mechanism that allows for easy, quick and releasable engagement of struts with the strut holding fixtures 11. To that end, as exemplarily shown in Figs. 2 and 3, the strut holding fixtures 11 may comprise a female snap-fit connector, for example by forming slitted side walls in the portion of the fixtures 11 that protrude from the outer shell segment 1. These slitted side walls are outwardly deflectable upon engagement with a male snap-fit connector. The side walls of the strut holding fixtures 11 may have a snap securing flange on the far side of the rotary joint body which extends inwardly towards and over the hollow interior. This snap securing flange may secure a male snap-fit connector of a strut engaged with the strut holding fixtures 11 from sliding out of the hollow interior.

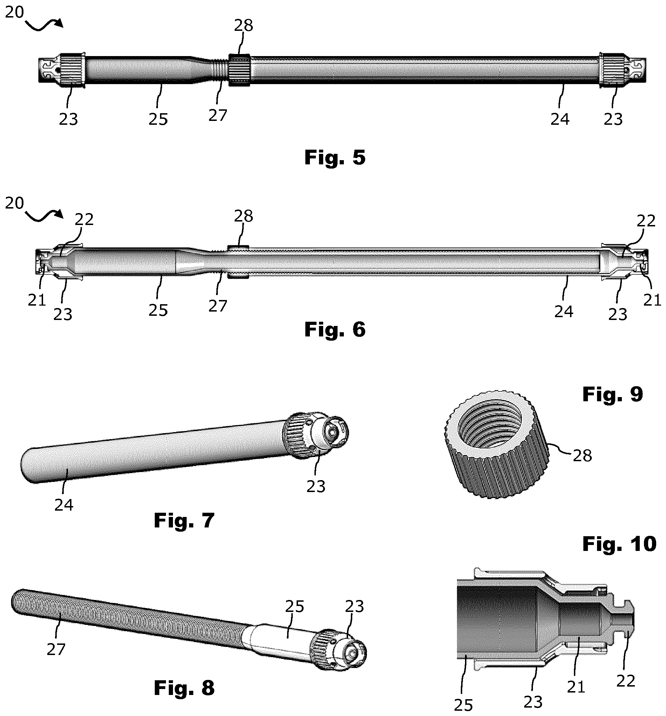

An exemplary male snap-fit connector with engaging members 21 and 22 is shown in Fig. 10 in cross sectional view. The engaging members 21 and 22 may be staggered end portions of gradually declining diameter of an interconnection strut 20, such as the one shown in Figs. 5 and 6. The engaging members 21, 22 are arranged at the respective end portions of each interconnection strut 20 for insertion into the strut holding fixtures 11 of the rotary joints 10. An engaging member cover 23 may slidably mounted over the engaging members 21, 22 and may be configured to slide over the respective strut holding fixtures 11 when the engaging members 21, 22 are engaged in order to stabilize and protect the snap-fit connection of the strut 20 with the rotary joint 10.

The engaging members 21, 22 of the interconnection struts 20 are designed as male snap-fit connectors adapted to snap-lock to the female snap-fit connectors of the strut holding fixtures 11. In order to provide for interconnection struts of adjustable length, the interconnection struts 20 may comprise a first female-threaded strut section 24 having a hollow cylindrical profile with a female-threaded locking nut 28. The first strut section 24 may be female-threaded over a predetermined portion of the end region opposite to the engaging members 21, 22. The first strut section 24 is exemplarily shown in Fig. 7; the female-threaded locking nut 28 in Fig. 9, respectively. The first strut section 24 is configured to take up a second strut section 25 into the hollow cylindrical profile. The second strut section 25, as exemplarily shown in Fig. 8, may have a male-threaded end portion 27, which is insertable or engageable into the hollow cylindrical profile of the first strut section 24, so that the male thread of the end portion 27 of the second strut section 25 may threadingly engage with the female thread of the first strut section 24. The male thread of the end portion 27 of the second strut section 25 may further be threadingly engaged with the female thread of the locking nut 28. Upon adjusting the position of the second strut section 25 with respect to the first female-threaded strut section 24, an overall length of the interconnection struts 20 may be selectively adjusted. This may be done by adjusting the percentage of the length of the end portion 27 of the second strut section 25 that extends into the hollow cylindrical profile of the first strut section 24. Finally, when the desired overall length of the struts 20 is adjusted, the locking nut 28 may be fastened to secure the positioning of the strut sections 24 and 25 with respect to each other. Obviously, the second strut section 25 may be equipped at its far end with a respective male snap-fit connector, that is with engaging members 21, 22 and optionally with an engaging member cover 23 as well.

As depicted in Fig. 3, the struts with strut sections 24 and 25 interconnect two rotary joints 10 at opposing ends thereof which are fixedly coupled to a primary structure element, such as the fuselage portion 40, and a secondary aircraft cabin structure, such as the cabin partition element 50, respectively. The joint region 30 as illustrated in Fig. 3 provides for a lateral and rotational decoupling of the secondary aircraft cabin structure from the primary structure element without floating. The interconnecting struts may be integrally formed with the rotary joints 10 at the opposing end portions thereof instead of relying on a snap-fit or snap-lock system as illustrated in Fig. 3.

The function of the rotary joints 10 is to divert torsional moments acting on the struts 20 lateral to their main axis into the annular shell collar. Since the strut holding fixtures 11 are able to swerve or give way in the plane of the surface of the shell collar upon being stressed with lateral moments, this swivelling motion of the interconnection struts 20 will always be able to compensate for any lateral moments acting on the struts 20. Thus, the force lines will always intersect at the same force line intersection point in the centre of the rotary joint 10, thereby not creating any net moment on the rotary joint 10 as a whole. As a consequence, the rotary joint 10 is free from torsional stress, leading to greater mechanical stability.

Most particularly, the secondary aircraft cabin structure 50 is fully decoupled from the primary structure element 40 to which it is attached. The secondary aircraft cabin structure 50 therefore remains part of the aircraft cabin 100 and does not need to be considered as part of the primary structure of the aircraft. Thus, reinforcing measures implemented in the primary structure do not need to take into account any of the secondary aircraft cabin structure 50 installed in the aircraft cabin 100.

A method for mounting a secondary aircraft cabin structure in an aircraft cabin includes engaging a plurality of interconnection struts 20 comprising engaging members 21, 22 at the respective end portions with respective strut holding fixtures 11 of a plurality of rotary joints 10. Each of the plurality of rotary joints 10 comprises an outer shell segment 1 having the outer shape of a segment of a solid of revolution, the outer shell segment 1 having an opening 4 arranged in the outer surface, an inner shell segment 2 having the outer shape of the segment of the solid of revolution of the outer shell segment 1, the inner shell segment 2 being aligned concentrically with the outer shell segment 1 and spaced apart from the outer shell segment 1 by a compensation gap, and a strut holding fixture 11 having a hollow interior and a flange portion 13 and being arranged in the opening 4 so that the flange portion 13 extends within the compensation gap between the inner shell segment 2 and the outer shell segment 1.
The rotary joints 10 are connected at first end portions of the interconnection struts 20 with a primary structure 40 of an aircraft cabin 100, for example at least one fuselage element 40. The rotary joints 10 are further connected at second end portions opposite to the first end portions of the interconnection struts 20 with a secondary aircraft cabin structure 50, for example a cabin partition element 50, in particular a cockpit wall.
A first subset of the plurality of interconnection struts 20 may each comprise a first female-threaded strut section 24 having a hollow cylindrical profile with a female-threaded locking nut 28 and a second strut section 25 having a male-threaded end portion 27, the male-threaded end portion 27 engaged with the hollow cylindrical profile of the first strut section 24 and the female thread of the locking nut 28.
In the foregoing detailed description, various features are grouped together in one or more examples or examples with the purpose of streamlining the disclosure. It is to be understood that the above description is intended to be illustrative, and not restrictive. Many other examples will be apparent to one skilled in the art upon reviewing the above specification. The invention is limited by the scope of the appended claims. The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### List of reference numerals and signs

- 1: Outer shell segment
- 2: Inner shell segment
- 4: Opening
- 10: Rotary joint
- 11: Strut holding fixture
- 13: Flange portion
- 20: Interconnection strut
- 21: Engaging member portion
- 22: Engaging member portion
- 23: Engaging member cover
- 24: First strut section
- 25: Second strut section
- 27: Male-threaded end portion
- 28: Female-threaded locking nut
- 30: Rotary joint region
- 40: Fuselage element
- 50: Cabin partition element
- 100: Aircraft cabin

## Claims

1. Aircraft cabin (100), comprising:
a primary structure (40);
a secondary aircraft cabin structure (50);
a plurality of interconnecting struts (20) coupling the primary structure (40) to the secondary aircraft cabin structure (50), each of the plurality of interconnecting struts (20) comprising engaging members (21, 22) at the respective end portions for insertion into strut holding fixtures (11) of corresponding rotary joints (10) attached at each opposing end, each of the rotary joints (10) comprising:
an outer shell segment (1) having an outer shape of a segment of a solid of revolution, the outer shell segment (1) having an opening (4) arranged in an outer surface of the outer shell segment;
an inner shell segment (2) having the outer shape of the segment of the solid of revolution of the outer shell segment (1), the inner shell segment (2) being aligned concentrically with the outer shell segment (1) and spaced apart from the outer shell segment (1) by a compensation gap; and
a strut holding fixture (11) having a hollow interior and a flange portion (13) and being arranged in the opening (4) so that the flange portion (13) extends within the compensation gap between the inner shell segment (2) and the outer shell segment (1);
wherein the primary structure (40) comprises at least one fuselage element (40);
wherein the secondary aircraft cabin structure (50) comprises a cabin partition element; and
wherein the secondary aircraft cabin structure (50) is fully decoupled from the primary structure element (40) to which it is attached.

2. Aircraft cabin (100) according to claim 1, wherein the outer shell segment (1), the inner shell segment (2) and the strut holding fixture (11) are formed as an integral assembly by an additive layer manufacturing, ALM, technique.

3. Aircraft cabin (100) according to one of the claims 1 and 2, wherein the diameter of the strut holding fixtures (11) is lower than the diameter of the openings (4) by a predefined clearance value.

4. Aircraft cabin (100) according to claim 3, wherein the diameter of the flange portion (13) is greater than the diameter of the opening (4).

5. Aircraft cabin (100) according to one of the claims 1 to 4, wherein the plurality of interconnection struts (20) comprise a first female-threaded strut section (24) having a hollow cylindrical profile with a female-threaded locking nut (28) and a second strut section (25) having a male-threaded end portion (27), the male-threaded end portion (27) being engageable into the female thread of the locking nut (28) and the female thread of the hollow cylindrical profile of the first female-threaded strut section (24).

6. Aircraft cabin (100) according to one of the claims 1 to 5, wherein the secondary aircraft cabin structure (50) comprises a cockpit wall.

7. Aircraft, comprising an aircraft cabin (100) according to one of the claims 1 to 6.

8. Method for mounting a secondary aircraft cabin structure in an aircraft cabin (100), the method comprising:
engaging a plurality of interconnection struts (20) comprising engaging members (21, 22) at the respective end portions with respective strut holding fixtures (11) of a plurality of rotary joints (10), each of the plurality of rotary joints (10) comprising:
an outer shell segment (1) having an outer shape of a segment of a solid of revolution, the outer shell segment (1) having an opening (4) arranged in an outer surface of the outer shell segment;
an inner shell segment (2) having the outer shape of the segment of the solid of revolution of the outer shell segment (1), the inner shell segment (2) being aligned concentrically with the outer shell segment (1) and spaced apart from the outer shell segment (1) by a compensation gap; and
a strut holding fixture (11) having a hollow interior and a flange portion (13) and being arranged in the opening (4) so that the flange portion (13) extends within the compensation gap between the inner shell segment (2) and the outer shell segment (1);
connecting the rotary joints (10) at first end portions of the interconnection struts (20) with a primary structure (40) of an aircraft cabin (100); and
connecting the rotary joints (10) at second end portions opposite to the first end portions of the interconnection struts (20) with a secondary aircraft cabin structure (50);
wherein the primary structure (40) comprises at least one fuselage element (40);
wherein the secondary aircraft cabin structure (50) comprises a cabin partition element; and
wherein the secondary aircraft cabin structure (50) is fully decoupled from the primary structure element (40) to which it is attached.

9. Method according to claim 8, wherein a first subset of the plurality of interconnection struts (20) each comprise a first female-threaded strut section (24) having a hollow cylindrical profile with a female-threaded locking nut (28) and a second strut section (25) having a male-threaded end portion (27), the male-threaded end portion (27) engaged with the hollow cylindrical profile of the first strut section (24) and the female thread of the locking nut (28).

10. Method according to one of the claims 8 and 9, wherein the secondary aircraft cabin structure (50) a cockpit wall.

## Patentansprüche

1. Flugzeugkabine (100), umfassend:
eine primäre Struktur (40);
eine sekundäre Flugzeugkabinenstruktur (50);
mehrere Zwischenverbindungsstreben (20), welche die primäre Struktur (40) mit der sekundären Flugzeugkabinenstruktur (50) koppeln, wobei jede der mehreren Zwischenverbindungsstreben (20) Eingriffnahmeelemente (21, 22) an den jeweiligen Endabschnitten umfasst, die in Strebenhaltevorrichtungen (11) von entsprechenden Drehgelenken (10), die an jedem gegenüberliegenden Ende angebracht sind, eingesetzt sind, wobei jedes der Drehgelenke (10) Folgendes umfasst:
ein äußeres Mantelsegment (1), das eine äußere Form eines Segments eines Rotationskörpers aufweist, wobei das äußere Mantelsegment (1) eine Öffnung (4) aufweist, die in einer Außenfläche des äußeren Mantelsegments angeordnet ist;
ein inneres Mantelsegment (2), das die äußere Form des Segments des Rotationskörpers des äußeren Mantelsegments (1) aufweist, wobei das innere Mantelsegment (2) konzentrisch auf das äußere Mantelsegment (1) ausgerichtet ist und von dem äußeren Mantelsegment (1) durch einen Ausgleichsspalt beabstandet ist; und
eine Strebenhaltevorrichtung (11), die einen hohlen Innenraum und einen Flanschabschnitt (13) aufweist und so in der Öffnung (4) angeordnet ist, dass sich der Flanschabschnitt (13) innerhalb des Ausgleichsspalts zwischen dem internen Mantelsegment (2) und dem äußeren Mantelsegment (1) erstreckt;
wobei die primäre Struktur (40) mindestens ein Rumpfelement (40) umfasst;
wobei die sekundäre Flugzeugkabinenstruktur (50) ein Kabinentrennwandelement umfasst; und
wobei die sekundäre Flugzeugkabinenstruktur (50) vollständig von dem Primärstrukturelement (40), an dem es angebracht ist, entkoppelt ist.

2. Flugzeugkabine (100) nach Anspruch 1, wobei das äußere Mantelsegment (1), das innere Mantelsegment (2) und die Strebenhaltevorrichtung (11) durch einen Additive Layer Manufacturing (ALM)-Technik als eine integrale Baugruppe ausgebildet sind.

3. Flugzeugkabine (100) nach einem der Ansprüche 1 und 2, wobei der Durchmesser der Strebenhaltevorrichtungen (11) um einen zuvor festgelegten Spielraumwert kleiner ist als der Durchmesser der Öffnungen (4).

4. Flugzeugkabine (100) nach Anspruch 3, wobei der Durchmesser des Flanschabschnitts (13) größer ist als der Durchmesser der Öffnung (4).

5. Flugzeugkabine (100) nach einem der Ansprüche 1 bis 4, wobei die mehreren Zwischenverbindungsstreben (20) eine erste Innengewinde-Strebensektion (24) umfassen, die ein hohles zylindrisches Profil mit einer Innengewinde-Sicherungsmutter (28) aufweist, und eine zweite Strebensektion (25) umfassen, die einen Außengewinde-Endabschnitt (27) aufweist, wobei der Außengewinde-Endabschnitt (27) in das Innengewinde der Sicherungsmutter (28) und in das Innengewinde des hohlen zylindrischen Profils der ersten Innengewinde-Strebensektion (24) eingeschraubt werden kann.

6. Flugzeugkabine (100) nach einem der Ansprüche 1 bis 5, wobei die sekundäre Flugzeugkabinenstruktur (50) eine Cockpitwand umfasst.

7. Flugzeug, das eine Flugzeugkabine (100) nach einem der Ansprüche 1 bis 6 umfasst.

8. Verfahren zum Montieren einer sekundären Flugzeugkabinenstruktur in einer Flugzeugkabine (100), wobei das Verfahren Folgendes umfasst:
Ineingriffbringen mehrerer Zwischenverbindungsstreben (20), die Eingriffnahmeelemente (21, 22) an den jeweiligen Endabschnitten umfassen, mit jeweiligen Strebenhaltevorrichtungen (11) mehrerer Drehgelenke (10), wobei jedes der mehreren Drehgelenke (10) Folgendes umfasst:
ein äußeres Mantelsegment (1), das eine äußere Form eines Segments eines Rotationskörpers hat, wobei das äußere Mantelsegment (1) eine Öffnung (4) aufweist, die in einer Außenfläche des äußeren Mantelsegments angeordnet ist;
ein inneres Mantelsegment (2), das die äußere Form des Segments des Rotationskörpers des äußeren Mantelsegments (1) aufweist, wobei das innere Mantelsegment (2) konzentrisch auf das äußere Mantelsegment (1) ausgerichtet ist und von dem äußeren Mantelsegment (1) durch einen Ausgleichsspalt beabstandet ist; und
eine Strebenhaltevorrichtung (11), die einen hohlen Innenraum und einen Flanschabschnitt (13) aufweist und so in der Öffnung (4) angeordnet ist, dass sich der Flanschabschnitt (13) innerhalb des Ausgleichsspalts zwischen dem internen Mantelsegment (2) und dem äußeren Mantelsegment (1) erstreckt;
Verbinden der Drehgelenke (10) an ersten Endabschnitten der Zwischenverbindungsstreben (20) mit einer primären Struktur (40) einer Flugzeugkabine (100); und
Verbinden der Drehgelenke (10) an zweiten Endabschnitten gegenüber den ersten Endabschnitten der Zwischenverbindungsstreben (20) mit einer sekundären Flugzeugkabinenstruktur (50);
wobei die primäre Struktur (40) mindestens ein Rumpfelement (40) umfasst;
wobei die sekundäre Flugzeugkabinenstruktur (50) ein Kabinentrennwandelement umfasst; und
wobei die sekundäre Flugzeugkabinenstruktur (50) vollständig von dem Primärstrukturelement (40), an dem es angebracht ist, entkoppelt ist.

9. Verfahren nach Anspruch 8, wobei eine erste Teilmenge der mehreren Zwischenverbindungsstreben (20) jeweils eine erste Innengewinde-Strebensektion (24) umfasst, die ein hohles zylindrisches Profil mit einer Innengewinde-Sicherungsmutter (28) aufweist, und eine zweite Strebensektion (25) umfasst, die einen Außengewinde-Endabschnitt (27) aufweist, wobei der Außengewinde-Endabschnitt (27) mit dem hohlen zylindrischen Profil der ersten Strebensektion (24) und dem Innengewinde der Sicherungsmutter (28) verschraubt wird.

10. Verfahren nach einem der Ansprüche 8 und 9, wobei die sekundäre Flugzeugkabinenstruktur (50) eine Cockpitwand ist.

## Revendications

1. Cabine d'avion (100) comprenant :
une structure principale (40) ;
une structure de cabine d'avion secondaire (50) ;
une pluralité d'entretoises d'interconnexion (20) couplant la structure principale (40) à la structure de cabine d'avion secondaire (50), chacune de la pluralité d'entretoises d'interconnexion (20) comprenant des éléments de mise en prise (21, 22) au niveau des parties d'extrémité respectives pour l'insertion dans des supports d'entretoises (11) de joints tournants correspondants (10) fixés à chaque extrémité opposée, chacun des joints tournants (10) comprenant :
un segment de coque externe (1) ayant une forme externe d'un segment de solide de révolution, le segment de coque externe (1) ayant une ouverture (4) agencée dans une surface externe du segment de coque externe ;
un segment de coque interne (2) ayant la forme externe du segment du solide de révolution du segment de coque externe (1), le segment de coque interne (2) étant aligné concentriquement avec le segment de coque externe (1) et espacé du segment de coque externe (1) par un espace de compensation ; et
un support d'entretoise (11) ayant un intérieur creux et une partie de bride (13) et étant agencé dans l'ouverture (4) de sorte que la partie de bride (13) s'étend dans l'espace de compensation entre le segment de coque interne (2) et le segment de coque externe (1) ;
dans laquelle la structure principale (40) comprend au moins un élément de fuselage (40) ;
dans laquelle la structure de cabine d'avion secondaire (50) comprend un élément de séparation de cabine ; et dans laquelle la structure de cabine d'avion secondaire (50) est complètement découplée de l'élément de structure principale (40) auquel elle est attachée.

2. Cabine d'avion (100) selon la revendication 1, dans laquelle le segment de coque externe (1), le segment de coque interne (2) et le support d'entretoise (11) sous formé en tant qu'ensemble intégré par une technique de fabrication additive, ALM.

3. Cabine d'avion (100) selon l'une des revendications 1 à 2, dans laquelle le diamètre des supports d'entretoises (11) est inférieur au diamètre des ouvertures (4) d'une valeur de jeu prédéfinie.

4. Cabine d'avion (100) selon la revendication 3, dans laquelle le diamètre de la partie de bride (13) est supérieur au diamètre de l'ouverture (4).

5. Cabine d'avion (100) selon l'une des revendications 1 à 4, dans laquelle la pluralité d'entretoises d'interconnexion (20) comprennent une première section d'entretoise à filetage femelle (24) ayant un profilé cylindrique creux avec un écrou de verrouillage à filetage femelle (28) et une seconde section d'entretoise (25) ayant une partie d'extrémité à filetage mâle (27), la partie d'extrémité à filetage mâle (27) pouvant être mise en prise dans le filetage femelle de l'écrou de verrouillage (28) et le filetage femelle du profilé cylindrique creux de la première section d'entretoise à filetage femelle (24).

6. Cabine d'avion (100) selon l'une des revendications 1 à 5, dans laquelle la structure de cabine d'avion secondaire (50) comprend une paroi de poste de pilotage.

7. Avion comprenant une cabine d'avion (100) selon l'une des revendications 1 à 6.

8. Procédé de montage d'une structure de cabine d'avion secondaire dans une cabine d'avion (100), le procédé comprenant de :
mettre en prise une pluralité d'entretoises d'interconnexion (20) comprenant des éléments de mise en prise (21, 22) au niveau des parties d'extrémité respectives avec des supports d'entretoises respectifs (11) d'une pluralité de joints tournants (10), chacun de la pluralité de joints tournants (10) comprenant :
un segment de coque externe (1) ayant une forme externe d'un segment de solide de révolution, le segment de coque externe (1) ayant une ouverture (4) agencée dans une surface externe du segment de coque externe ;
un segment de coque interne (2) ayant la forme externe du segment du solide de révolution du segment de coque externe (1), le segment de coque interne (2) étant aligné concentriquement avec le segment de coque externe (1) et espacé du segment de coque externe (1) par un espace de compensation ; et
un support d'entretoise (11) ayant un intérieur creux et une partie de bride (13) et étant agencé dans l'ouverture (4) de sorte que la partie de bride (13) s'étend dans l'espace de compensation entre le segment de coque interne (2) et le segment de coque externe (1) ;
connecter les joints tournants (10) au niveau de premières parties d'extrémité des entretoises d'interconnexion (20) avec une structure principale (40) d'une cabine d'avion (100) ; et
connecter les joints tournants (10) au niveau de secondes parties d'extrémité opposées aux premières parties d'extrémité des entretoises d'interconnexion (20) avec une structure de cabine d'avion secondaire (50) ;
dans lequel la structure principale (40) comprend au moins un élément de fuselage (40) ;
dans lequel la structure de cabine d'avion secondaire (50) comprend un élément de séparation de cabine ; et
dans lequel la structure de cabine d'avion secondaire (50) est complètement découplée de l'élément de structure principale (40) auquel elle est attachée.

9. Procédé selon la revendication 8, dans lequel un premier sous-ensemble de la pluralité d'entretoises d'interconnexion (20) comprennent chacun une première section d'entretoise à filetage femelle (24) ayant un profilé cylindrique creux avec un écrou de verrouillage à filetage femelle (28) et une seconde section d'entretoise (25) ayant une partie d'extrémité à filetage mâle (27), la partie d'extrémité à filetage mâle (27) étant en prise avec le profilé cylindrique creux de la première section d'entretoise (24) et le filetage femelle de l'écrou de verrouillage (28).

10. Procédé selon l'une des revendications 8 et 9, dans lequel la cabine d'avion secondaire (50) est une paroi de poste de pilotage.
